# EUROPEAN PATENT APPLICATION

(11) **EP 1 463 336 A2**
(43) Date of publication of application: **29.09.2004**
(21) Application number: 04075696.7
(22) Date of filing: 25.02.2004
(51) Int. Cl.: H04N 9/31

(54) **Projection device and method for transmitting light in a projection device**

(30) Priority: 03.03.2003 US 450671 P
(71) Applicant: Barco, naamloze vennootschap., 8500 Kortrijk (BE)
(72) Inventor: Lang, Richard, Tokyo 155-003 (JP)
(74) Representative: Donné, Eddy

(57) **Abstract**

A projection device, wherein light (1) emitted from at least one light source (2), is split in different colors (3-4-5), in particular primary colors, and subsequently is transmitted to respective light valves, said projection device comprising several optical components, wherein said optical components are arranged in such configuration that at least one splitting takes place at a location in which the light (1) of said at least one light source (2) is still in a quasi-parallel or parallel state.

## Description

The present invention relates generally to a projection device of the type in which light is split in different colors and the subsequently obtained light rays are transmitted to light valves, where the light rays are modulated in accordance with the image to be displayed.

A projection device of this type is known from EP 1.107.611.

In particular, the invention relates to a projection device of the above mentioned type, wherein a particular configuration of several components is applied, more specifically a particular configuration is used with respect to the locations of the integrators, for example fly-eye integrators, and/or the prepolarizers and/or the focussing elements.

Furthermore, novel projector configurations comprising a new generation of wire-grid polarizers, two or more sets of fly-eye integrators, lambda/2 films, as well as various other optical components are proposed.

The present invention can be applied in combination with different kinds of modulating devices, also called imaging devices, in which light of different colors, in particular primary colors, is brought together in a controlled manner so as to create an image. However, in the preferred embodiment, the invention is intended to be used in combination with modulating or imaging devices using transmissive or reflective LCD displays.

Manufacturing technology breakthroughs in the last few years have allowed to produce very high quality micro-displays such as transmissive LCD's, reflective LCOS or DMD's at competitive prices. This has led to a tremendous growth in popularity of more compact and bright projection displays. However, the ever-increasing demand for even brighter projectors with higher contrast ratio, resolution and color uniformity, as well as faster light switching speed, is continuously driving the industry to further improve the quality of the optical components and rethink the configuration of the projection optics and optical engines. Optical engineers who design projectors based on reflective displays, face such challenges as transforming light emitted from one or more lamps into a single polarized beam as efficiently as possible, separating white light into uniform color bands and making light interact with the image producing displays while maintaining a very high contrast ratio.

The object of the present invention substantially consists in providing configurations of optical elements, which configurations improve the quality of the images produced by enhancing the contrast ratio and improve the color splitting and uniformity of the ray bundles incident on the displays, while maintaining a high light usage efficiency.

The invention shows different aspects. Hereto, reference is made to the annexed claims, which are of non restrictive nature. Furthermore, regarding additional aspects, reference is made to the following description.

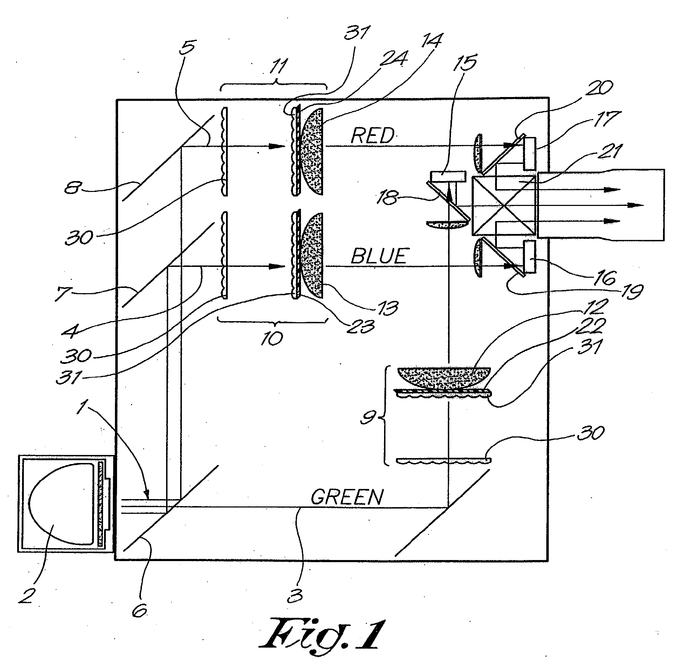

Figures 1, 2 and 3 are schematic representations of possible projection devices, which in these non limitative examples, comprise wire-grid polarizers used in combination with reflective LCD displays and fly-eye integrator sets to obtain images with a high contrast ratio and high color uniformity.

In particular :
Figure 1 shows a basic projector layout comprising various optical components such as dichroic mirrors to separate white light into its three fundamental colors, three fly-eye integrator pairs to form rectangular overfills on displays and wire-grid polarizers to redirect the image produced by the displays towards to the projection lens;
Figure 2 shows a compact version of the configuration shown in figure 1;
Figure 3 shows a projector configuration in which only two sets of fly-eye integrators are used and wherein a gradient dichroic mirror is used to separate cyan into green and blue light beams.

As represented in the drawings, this invention relates to a new LCD projector configuration comprising optical devices, such as wire-grid polarizers, that are used as polarizing beam splitters (PBS's), and three sets of fly-eye integrators instead of the single set more commonly found in conventional projectors.

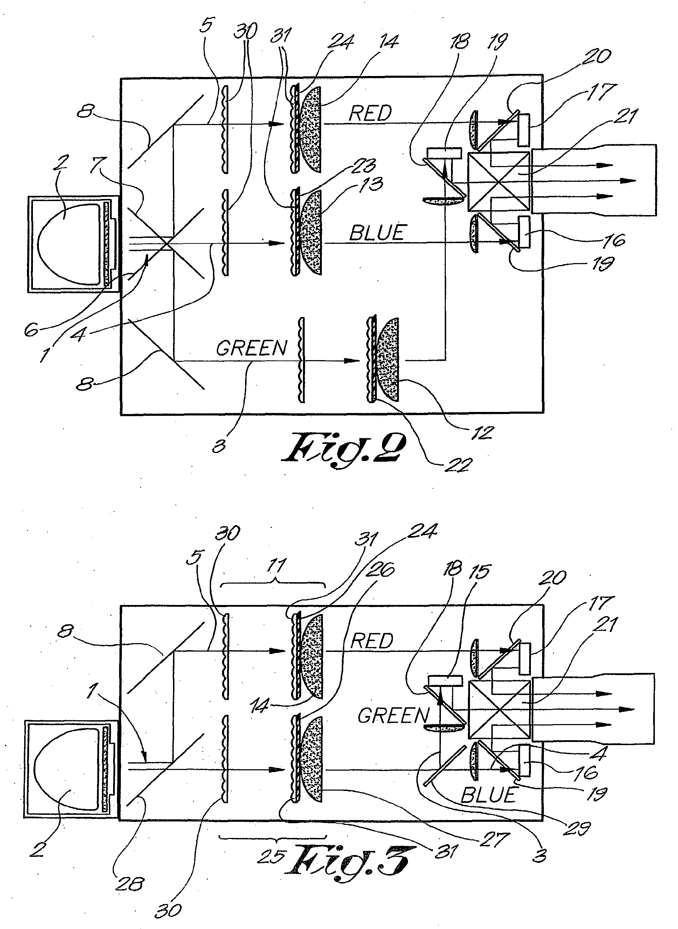

As shown in figures 1 and 2, light rays 1 emitted from a parabolic lamp 2 are split into three colors, indicated by rays 3-4-5, by means of dichroic mirrors 6-7. By means of these dichroic mirrors 6-7 and possible other mirrors 8, the rays 3-4-5 of the splitted light interact with the integrators 9-10-11, which, in combination with the auxiliary lenses, amongst which the imaging lenses 12-13-14, will then create a rectangular light overfill on displays 15-16-17. The colored images created by the displays 15-16-17 are then directed by the PBS's 18-19-20 towards the X-cube 21 in which they are recombined in a known manner before being projected on the screen or on any other element.

Moreover, the configuration comprises prepolarizers 22-23-24 consisting of prepolarizing arrays.

Said PBS's preferably make use of wire-grid polarizers, which exhibit a very wide viewing angle and a high heat tolerance without degradation of their optical properties. Therefore, they are particularly well-suited for the harsh environment found in a high intensity projection display. A wire-grid polarizer consists in a network of narrow and elongated stripes of metal formed on a transparent substrate, the stripes being separated from each other by a narrow gap. Through the interaction of the incident light rays with the grid, waves with a polarization parallel to the length of the metallic wires are reflected while the other rays are transmitted. These polarizing devices, which do not support depolarizing multi-coatings and whose properties are not influenced by heat, make ideal substitutes for the more traditional glass PBS's in reflective LCD projection systems and allow to reach much higher contrast ratios.

The insertion of three sets of integrators 9-10-11 allows to separate the white beam of light, formed by rays 1, into its fundamental colors while these rays 1, that were emitted from parabolic lamps, are still in the quasi-parallel state. This leads to better color uniformity on the screen and can also help to achieve a higher efficiency and contrast ratio since each channel can be optimized independently. Using three sets of integrators 9-10-11 also allows to eliminate supplementary relay lenses that are usually used in at least one channel in traditional configurations.

In particular, it is clear that, in this way, each integration and also each prepolarization can be optimized in function of the primary color concerned.

Although, as shown in figures 1 and 2, the inventive aspects are preferably applied for each color separately, it can also be applied for a group of colors, as shown in figure 3. According to the configuration of figure 3, one integrator 25 is used for the group of colors comprising green and blue, as well as one prepolarizer 26 and one imaging lens 27, which integrator 25, prepolarizer 26 and lens 27 are arranged downstream of the splitting mirror 28. The other splitting mirror 29 is located downstream of the integrator 25.

It is clear that, instead of splitting mirrors, also other light splitting elements or light separating elements can be used.

It is also clear that, instead of an X-cube 21, another color composition element can be applied.

Moreover, it is clear that, instead of an integrator 9-10-11-25, which, as shown in the figures, is composed of fly-eye lenses 30-31, also other types of integrators can be used, without leaving the scope of the invention.

It is to be noted that in the embodiments of enclosed figures 1 to 3, prepolarizing arrays are applied which are designed to be used in combination with fly-eye integrators and therefore are principally located after the fly-eye lenses 30-31. According to the invention, it is however not excluded to use prepolarizing techniques elsewhere in the system, which may be in addition to the prepolarizers used after the integrators, or which may be instead of these prepolarizers. Consequently, by way of example, there could be iserted prepolarizing elements just after the lamp and in front of the light splitting system, or just after the light splitting system or just after any of the light splitting elements.

Of course, independently of the location, any kind of suitable prepolarizing techniques may be applied.

Furthermore, it is clear that when talking about the location of "prepolarizers", this relates to polarizing elements different from the elements which are conventionally used in the polarizing beam splitters.

Finally, it should be noted that, preferably, according to the invention, the light of the different colors is transmitted through the projection device in such a manner that, in respect to each other, an inversion is excluded, this preferably in combination with the use of an X-cube and transmissive displays.

## Claims

1. Projection device, **characterized in that** light (1) emitted from at least one light source (2), is split in different colors (3-4-5), in particular primary colors, and subsequently is transmitted to respective light valves, said projection device comprising several optical components, wherein said optical components are arranged in such configuration that at least one splitting takes place at a location in which the light (1) of said at least one light source (2) is still in a quasi-parallel or parallel state.

2. Projection device, **characterized in that** light (1) emitted from at least one light source (2) by means of light splitting elements (6-7-28), is split in different colors (3-4-5), in particular primary colors, and subsequently, is transmitted to respective light valves, said projection device comprising several optical components, amongst which at least one light integrator (9-10-11-25) or light integrator component, which integrator (9-10-11-25) or light integrator component is located in the path followed by the light downstream of at least one of said light splitting elements (6-7-28).

3. Projection device according to claim 2, **characterized in that** said device comprises a light integrator (9-10-11) or light integrator components for each of said colors (3-4-5), each of these light integrators (9-10-11) or light integrator components being located in the path followed by the light downstream of the light splitting elements (6-7) creating the light of the color concerned.

4. Projection device according to claim 2 or 3, **characterized in that** said light integrator components are substantially composed of fly-eye lenses (30-31), forming part of a fly-eye integrator.

5. Projection device according to any of claims 2 to 4, **characterized in that** in the path of the light of at least one primary color, after being split from the other primary colors, a polarizer, in particular a prepolarizer (22-23-24-26), for example a prepolarizing array, is provided downstream from the corresponding integrator (9-10-11-25) or integrator components.

6. Projection device according to any of claims 2 to 5, **characterized in that**, in the path followed by the light, directly or indirectly downstream from said integrator (9-10-11-25) or said integrator components, an imaging lens (12-13-14-27) or condenser lens is provided.

7. Projection device according to any of claims 2 to 6, **characterized in that** the path followed by the light (1), upstream from the light splitting elements (6-7-28), is free from an integrator or integrator components.

8. Projection device according to any of claims 2 to 7, **characterized in that** the path followed by the light (1), upstream from the light splitting elements (6-7-28) is free from any sort of polarizer, in particular prepolarizing arrays.

9. Projection device according to any of claims 2 to 8, **characterized in that** the path followed by the light (1), upstream from the light splitting elements (6-7-28), is free from any sort of imaging or condenser lenses.

10. Projection device, **characterized in that** light (1) emitted from at least one light source (2) by means of light splitting elements (6-7-28), is split in different colors (3-4-5), in particular primary colors, and subsequently, is transmitted to respective light valves, said projection device comprising several optical components, amongst which at least one polarizer (22-23-24-26), in particular a prepolarizing array, wherein this polarizer (22-23-24-26) or prepolarizing array is located downstream from at least one of the light splitting elements (6-7-28), and preferably downstream of all light splitting elements (6-7-28) which are required to obtain the light of the color in which said polarizer (22-23-24-26) or prepolarizing array is located.

11. Projection device, **characterized in that** light (1) emitted from at least one light source (2), is split in different colors (3-4-5), in particular primary colors, and subsequently is transmitted to respective light valves, wherein these light valves create colored images which by means of polarizing beam splitters (18-19-20), are directed to a color composition element, such as an X-cube (21), wherein at least one of said polarizing beam splitters (18-19-20), and preferably each of said polarizing beam splitters (18-19-20), consist of wire-grid polarizers.

12. Method for transmitting light in a projection device, **characterized in that** light (1) emitted from at least one light source (2) is split in different colors (3-4-5), in particular primary colors, and subsequently, is transmitted to respective light valves, wherein one of the following steps or a combination of two or more of the following steps takes place:
- that for at least one of said colors, or for at least one group of already split-off colors, and preferably for each of said colors (3-4-5), the splitting of the light takes place at a location in which the light (1) of said at least one light source (2) is still in a quasi-parallel or parallel state;
- that for at least one of said colors, or for at least one group of already split-off colors, and preferably for each of said colors (3-4-5), an integration takes place after the splitting in the respective color or group of colors is carried out;
- that for at least one of said colors, or for at least one group of already split-off colors, and preferably for each of said colors (3-4-5), a prepolarization takes place after the splitting in the respective color or group of colors is carried out, whereby this prepolarization in case of an integration of the light is preferably carried out after this integration;
- that for at least one of said colors, or for at least one group of already split-off colors, and preferably for each of said colors (3-4-5), a splitting upto this color or group of colors, takes place before any focussing with respect to this color or group of colors is carried out;
- that by means of the light valves colored images are created which by means of polarizing beam splitters (18-19-20) are directed to a color composition element, such as an X-cube (21), wherein for said polarizing beam splitters (18-19-20), wire-grid polarizers are applied;
- that the light of the different colors (3-4-5) is transmitted through the projection device in such a manner that, in respect to each other, an inversion is excluded, this preferably in combination with the use of an X-cube (21) and transmissive displays (15-16-17).

13. Method according to claim 12, **characterized in that** before the first splitting step of the splitting into the primary colors, and preferably before any of all splitting steps applied, no integration and/or no focussing takes place.
